Europäisches Patentamt

European Patent Office

Office européen des brevets

(19)

(11) Veröffentlichungsnummer: 0 065 927
A1

# (12) EUROPÄISCHE PATENTANMELDUNG

(21) Anmeldenummer: 82730017.9

(22) Anmeldetag: 01.03.82

(51) Int. Cl.³: G 05 D 13/62

(30) Priorität: 22.05.81 DE 3121148

(43) Veröffentlichungstag der Anmeldung:
01.12.82 Patentblatt 82/48

(84) Benannte Vertragsstaaten:
FR GB IT NL SE

(71) Anmelder: Mannesmann AG
Mannesmannufer 2
D-4000 Düsseldorf 1(DE)

(72) Erfinder: Grüner, Manfred
Eichenhang 45
D-7900 Ulm(DE)

(74) Vertreter: Presting, Hans-Joachim et al,
Patentanwaltsbüro Meissner & Meissner Herbertstrasse
22
D-1000 Berlin 33 West(DE)

(54) Verfahren und Schaltungsanordnung zum genauen Drehzahl-Regeln eines Gleichstrommotors, insbesondere eines Matrixdrucker-Gleichstrommotors.

(57) Die Erfindung betrifft ein Verfahren und Schaltungs-anordnung zum genauen Drehzahl-Regeln eines Gleichstrommotors, insbesondere eines Matrixdrucker-Gleichstrommotors.

Ein solches Verfahren zum genauen Drehzahl-Regeln eines Gleichstrommotors erfolgt durch Ändern des Ansteue-rungstromes innerhalb einer Periode. In diesen Fällen findet anstelle eines Wechselstrommotors mit mechanischer Un-tersetzung ein Gleichstrommotor Anwendung. Der Gleich-strom- Nebenschlußmotor liegt mit seiner Erregerwicklung an einer konstanten Spannung; daher ist der magnetische Fluß bis auf eine geringe Schwächung durch die Ankerrückwirkung ebenfalls konstant. Auch bei Belastung bleibt die Drehzahl des Gleichstrom-Nebenschlußmotors ziemlich kon-stant. Für ausgewählte Fälle, in denen Maschinen und Geräte mit hin- und hergehenden Maschinenteilen angetrieben werden sollen, die ihrerseits wiederum andere Elemente steuern, ist das gewöhnliche Regelverfahren durch Ändern des Ansteuerungsstromes nicht ausreichend.

Ein mit höchster Genauigkeit arbeitendes Drehzahl-Regelverfahren besteht darin, daß der Vergleichswert zwi-schen Ist- und Sollwert entsprechend ermitteltem negativen oder positiven Vorzeichen in Form von Impulspausen jeweils zwischen Impulsfolgen am Anfang der Periode zum Abschalten des pulsierenden Ansteuerungsstromes mit der Zeitdauer des Unterschiedes zwischen Ist- und Sollwert verwendet wird. Die zugehörige Schaltungsanordnung bedient sich eines Soll- bzw. Istwertzählers (Z1) mit dem vorgegebenen Zählwert, eines Vergleichers (V1) und eines Pausenzeit-Zählers (Z2), wobei der Pausenzeit-Zähler (Z2) als Unterbrecher für den Motoransteuerstrom dient und den Zeitwert für die Pausenlänge vorgibt.

Fig. 2

EP 0 065 927 A1

Croydon Printing Company Ltd.

Die Erfindung betrifft ein Verfahren und eine Schaltungsanordnung zum genauen Drehzahlregeln eines Gleichstrommotors, insbesondere eines Matrixdrucker-Gleichstrommotors durch Ändern des Ansteuerungsstromes innerhalb einer Periode.

In vielen Fällen technischer Spezialgebiete sind anstelle von Gleichstrommotoren Wechselstrommotoren mit mechanischer Untersetzung in Verwendung. Derlei Antriebe, bestehend aus dem Wechselstrommotor und einem mechanischen Untersetzungsgetriebe sind z. B. in Matrixdruckern eingesetzt. Eine Feldsteuerung wie bei Gleichstromnebenschlußmotoren ist bei Wechselstrommotoren, wie z. B. Einphasenmotoren, jedoch nicht möglich. Für Maschinen und Geräte mit hin- und hergehenden Maschinenteilen, die ihrerseits wiederum andere Elemente steuern, sind Wechselstrommotoren ohne mechanische Untersetzung in ihrer Drehzahl nicht genau genug zu regeln. Von solchen Antrieben in Matrixdruckern wird eine hohe Genauigkeit der den Druckkopf steuernden Schlittengeschwindigkeit verlangt. Die mit Wechselstrom angetriebenen Motoren ohne mechanische Untersetzung erzeugen jedoch keine konstante Motorgeschwindigkeit, insbesondere wenn eine hin- und hergehende gleichförmige Bewegung eines Maschinen- oder Geräteteils notwendig ist.

Anders liegen die Verhältnisse beim Drehzahlregeln eines Gleichstrommotors. Der Gleichstrom-Nebenschlußmotor liegt mit seiner Erregerwicklung an einer konstanten Spannung; daher ist der magnetische Fluß bis auf eine geringe Schwächung durch die Ankerrückwirkung ebenfalls konstant. Auch bei Belastung bleibt die Drehzahl des Gleichstrom-Nebenschlußmotors ziemlich konstant. Für ausgewählte Fälle ist jedoch auch eine bloße Drehzahlregelung durch Ändern des Ansteuerungsstromes nicht ausreichend.

Der Erfindung liegt die Aufgabe zugrunde, ein mit höchster Genauigkeit arbeitendes Drehzahl-Regelverfahren und eine dem entsprechende Schaltungsanordnung vorzuschlagen.

- 2 -

Diese Aufgabe wird erfindungsgemäß dadurch gelöst, daß der Vergleichswert zwischen Ist- und Sollwert entsprechend ermittelten negativen oder
positiven Vorzeichen in Form von Impulspausen jeweils zwischen Impulsfolgen
am Anfang der Periode zum Abschalten des pulsierenden Ansteuerungsstromes
mit der Zeitdauer des Unterschiedes zwischen Ist- und Sollwert verwendet
wird. Dadurch wird das Motoransteuersignal kürzer oder länger unterbrochen.
In dieser Verfahrensweise liegt die eigentliche Besonderheit des Regelverfahrens. Nicht die Impulsbreite wird bei dieser intermittierenden Betriebsart geändert, sondern die Impulspause. Die Impulspause am Anfang der
Periode bietet den Vorteil, daß der Gleichstrommotor immer bis zur nächsten
Zählflanke bestromt und anschließend für eine Zeitlang entsprechend der
korrigierten Pausenzeit abgeschaltet wird. Das erfindungsgemäße Verfahren
begründet auch ein gewisses Selbstregelverhalten.

Währenddem das beschriebene Verfahren aufgrund einer Analog-Schaltungsanordnung ausgeführt werden kann, ist ferner vorgesehen, daß Istwerte,
Sollwert, Vergleichwerte und Impulspausen jeweils in Form von Zählwerten
zugrundegelegt werden.

Eine besonders günstige Anwendung des erfindungsgemäßen Verfahrens erfolgt
dann, wenn als Istwert die jeweilige Zählflanke eines Impulses der in eine
Vielzahl von Periodenabschnitten aufgelösten Drehgeschwindigkeit der mit
einer opto-elektronisch abgetasteten Inkrementalscheibe versehenen Motorwelle verwendet wird. Die Auflösung der Drehgeschwindigkeit in Periodenabschnitte stellt insbesondere bei Matrixdruckern die Möglichkeit dar, ausgeprägte Impulsflanken zu bilden.

Nach der weiteren Erfindung ist vorgesehen, daß der Soll- bzw. Ist-Zählwert
auf der Basis einer fest eingegebenen Anzahl von Zählimpulsen gebildet
wird. Grundsätzlich kann mit einem höheren Zählwert als Sollwert die
Genauigkeit des Regelverfahrens gesteigert werden. Ansonsten ist jeder
höhere Zählwert für eine Festlegung geeignet.

In weiterer Ausgestaltung der Erfindung wird vorgeschlagen, daß die Sollwert-Zählung nach jeder Periodendauer angehalten und auf den Wert Null zurückgeführt wird. Demzufolge kann die Regelung in ihrem Verhalten langsam oder schnell reagierend eingestellt werden.

Gemäß einer anderen Ausgestaltung der Erfindung ist vorgesehen, daß der Vergleichszählwert in dem Sollwert-Zähler unter Auslösung eines Hilfssignals in Abhängigkeit der Zählflanke des Beginnes einer Periodendauer gebildet wird.

Der vorgegebene Zählwert-Zyklus braucht dann nicht zu Ende geführt werden, wenn nach einer weiteren, die Erfindung verbessernden Maßnahme das Hilfssignal ein weiteres Hilfssignal auslöst, welches den Soll- bzw. Istwert-Zähler auf Null setzt.

Die Schaltungsanordnung zur Durchführung des erfindungsgemäßen Verfahrens sieht vor, daß einem Soll- bzw. Istwert-Zähler mit dem vorgegebenen Zählwert ein Vergleicher und ein Pausenzeit-Zähler zugeordnet sind, wobei der Pausenzeit-Zähler als Unterbrecher für den Motoransteuerstrom dient und den Zeitwert für die Pausenlänge vorgibt. Sollwert-Zähler, Vergleicher, Pausenzeit- bzw. Istwert-Zähler können aus integrierten Schaltkreisen bestehen.

Der Takt für den Sollwert-Zähler wird erzeugt, indem am Eingang des Soll- bzw. Istwert-Zählers ein Quarz-Oszillator für die Erzeugung einer konstanten Frequenz angeschlossen ist.

Eine andere Maßnahme besteht darin, daß an den jeweiligen Ausgängen des Pausenzeit-Zählers die Zählwerte in zwei Zählrichtungen begrenzende Gatter angeschlossen sind. Diese Maßnahme berücksichtigt die jeweilige Drehrichtung der Motorwelle.

Für einen spezifischen Einsatz der Erfindung wird außerdem vorgeschlagen, daß der Soll- bzw. Istwertzähler bei Anwendung auf einen Matrixdrucker der Nadelkopfbauart auf einen maximalen Zählwert von 120 bis 130 Impulsen pro Periodendauer eingestellt ist.

Ein Ausführungsbeispiel der Erfindung ist in der Zeichnung dargestellt und wird im folgenden näher beschrieben. Es zeigen

Fig. 1 die der Erfindung zugrundeliegende, auf einen Matrixdrucker angewendete Antriebseinheit in einer perspektivischen Darstellung,

Fig. 2 eine schematische Darstellung des Impulsverlaufs der einzelnen Signale zum Drehzahlregeln,

Fig. 3 eine Ausführungsform der erfindungsgemäßen digitalen Schaltungs- .anordnung.

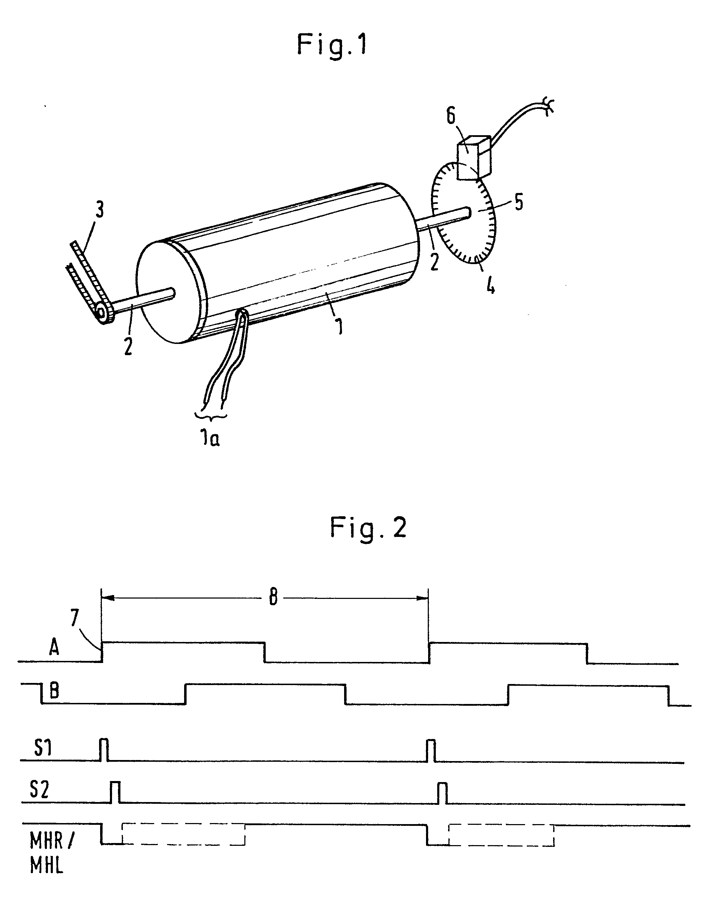

Der in Fig. 1 dargestellte Gleichstrommotor 1 leistet bei einer Nenn- spannung 1a von 52 V und einer Stromaufnahme von 2,2 A ca. 92 W bei einer Drehzahl von 3000 1/min und 100 % Einschaltdauer. Der Gleichstrommotor 1 treibt mit der Motorwelle 2 den Antriebsriemen 3 für ein weiter nicht dargestelltes Getriebe zum Hin- und Herbewegen der genannten Maschinen- bzw. Geräteteile.

Auf der Motorwelle 2 ist außerdem die Inkrementalscheibe 4 drehfest angeordnet. An der Inkrementalscheibe 4 befinden sich in gleichmäßig über den Umfang verteilten Abständen zwei auf verschiedenen Radien liegende Reihen von Schlitzen 5, durch die bei Drehung der Motorwelle 2 von der opto-elektronischen Abtastung 6 ausgesandtes Licht in zeitlicher Folge der vorbeibewegten Schlitze 5 gemessen wird. Diese beiden Reihen von Schlitzen 5 erzeugen die Rechteck-Signale A und B (Fig. 2).

Die Inkrementalscheibe 4 enthält z. B. 200 oder 400 der Schlitze 5 mit 200 bzw. 400 gleichgroßen Teilungsabständen. Das Rechteck-Signal A bildet folglich den Istwert der Motordrehzahl und bildet demzufolge Perioden unterschiedlicher Zeitdauer.

Das Rechtecksignal B dient lediglich der Drehrichtungserkennung und ist darüber hinaus nicht Gegenstand der vorliegenden Erfindung und braucht deshalb nicht näher beschrieben zu werden.

-5-

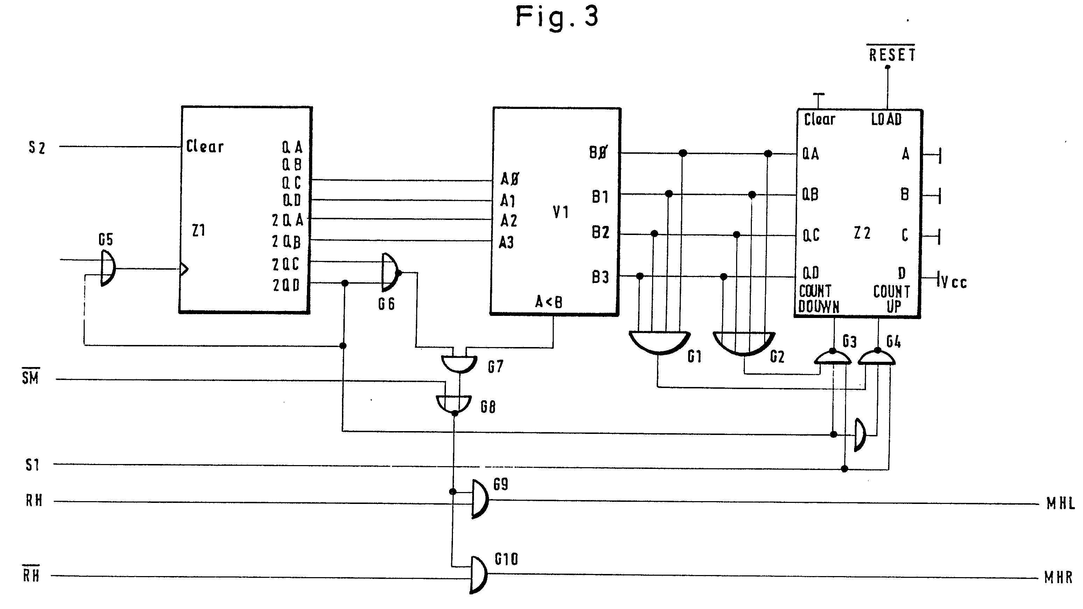

Mit der Zählflanke 7, die aus dem Reckteck-Signal B = Null und der ansteigenden (bzw. in Gegendrehrichtung abfallenden) Flanke des Reckteck-Signals A gebildet wird, erfolgt die Erzeugung des Motorsteuer-Signals SM (Fig. 3), das in einem Matrixdrucker die Motorsteuer-Signale MHR bzw. MHL (Motor horizontal rechts, Motor horizontal links) bildet. Die Motorsteuer-Signale SM (MHR, MHL) sind jeweils die Startsignale für den Regelzyklus, von welchem die beiden Hilfssignale S1 und S2 nacheinander abgeleitet werden.

Im praktischen Ausführungsbeispiel dauert eine Periode 8 entsprechend der Geschwindigkeit des Gleichstrommotors 1 unter Zugrundelegung von 200 Inkrementen (gleichbedeutend mit 200 Schlitzen 5 auf der Inkrementalscheibe 4) 500. msec. Angenommen der Gleichstrommotor 1 läuft aus welchen Gründen auch immer schneller, so sinkt die Periodendauer 8 beispielsweise auf 450 msec, was den Istwert darstellt. Ausgehend von der Zählflanke 7 wird der eingestellte Sollwert, der z. B. auf einen Zählwert von 128 entsprechend 500 msec eingestellt sei, verglichen. Ergibt sich ein Ist-Zählwert kleiner als der Soll-Zählwert (von 128 Zähleinheiten) ist der Gleichstrommotor 1 zu langsam und muß beschleunigt werden. Für den Fall eines größeren Ist-Zählwertes als der Soll-Zählwert ist der Gleichstrommotor 1 zu schnell und muß verlangsamt werden.

Das Hilfssignal S1 wird über eine getrennte Schaltung erzeugt. Die Hilfssignale S1 und S2 werden durch die Zählflanke 7 ebenfalls über eine getrennte Schaltung abgerufen. Die zeitliche Lage der Zählflanke 7 bestimmt den Istwert. Das Hilfssignal S1 wertet diesen Istwert aus, indem die Pausenzeit innerhalb des Pausenzeit-Zählers Z2 für den nächsten Regelzyklus vergrößert oder verkleinert abgespeichert wird. Das Hilfssignal S2 stellt den Soll- bzw. Istwert-Zähler Z1 jeweils wieder auf den Zählwert Null zurück, wobei die Pausenzeit, in der der Ansteuerstrom abgeschaltet ist, dabei berücksichtigt wird.

In Fig. 2 ist an der Impulskurve MHR/MHL die zu Beginn der Periode liegende Pausenzeit gestrichelt eingezeichnet. Die Lage am Anfang der Periode gewährleistet die folgende Bestromung bis zum Ende der Periode. Aufgrund der unterschiedlichen Länge der Pausenzeit in der folgenden rechten Periode zeigt sich die höchstgenaue Regelung.

Die zugehörige Schaltungsanordnung gemäß Fig. 3 zeigt den Soll- bzw. Istwert-Zähler Z1 als integrierten Schaltkreis, der aus einem 2 x 4-Bit-Binär-Vorwärtszähler (dezimal von 0 bis 15) besteht, und der den Rückstelleingang "clear" für das Hilfssignal S2 aufweist. Der Soll- bzw. Istwert-Zähler Z1 dient außerdem zur Erfassung der Istzeit, und zwar ob diese größer oder kleiner als die Sollzeit ist.

Einen weiteren integrierten Schaltkreis bildet der Pausenzeit-Zähler Z2, im weiteren Text kurz als "Zähler Z2" bezeichnet, der aus einem 4-Bit-Binär-Vor- und Rückwärtszähler (0 bis 15) mit Rückstelleingang "clear" und Lade- bzw. Signaleingang "load" besteht. Der Zähler Z2 dient gleichzeitig als Istwert-Zähler und als Pausenzeit-Zähler.

Zwischen Soll- bzw. Istwert-Zähler Z1 und Zähler Z2 ist schaltungstechnisch der Vergleicher V1, der ebenfalls als integrierter Schaltkreis ausgebildet ist, eingefügt. Der Vergleicher V1 besteht aus einem 4-Bit-Vergleicher mit den A-Eingängen A0, A1, A2, A3 gegenüber den B-Eingängen B0, B1, B2, B3 und bildet drei Ausgänge A größer B, A = B und A kleiner B, die eine logische "1" ergeben, wenn die entsprechende Konfiguration zutrifft. Der Vergleicher V 1 dient außerdem zur Impuls-Pausen-Erzeugung.

Aus Fig. 3 ist ferner eine Reihe von Verknüpfungen ersichtlich, die nachfolgend beschrieben sind:

Der Gatterausgang G1 ist logisch "1", wenn der Ausgang am Zähler Z2 kleiner als der Zählwert 15 ist. Der Gatterausgang G2 ist logisch "1", wenn der Ausgang am Zähler Z2 größer als Null ist. Das Gatter G3 generiert den Rückwärts-Zählimpuls für den Zähler Z2 und das Gatter G4 den Vorwärtszählimpuls für den Zähler Z2.

Das Gatter G5 generiert den Zählimpuls für den Sollwert-Zähler Z1. Die Gatter G6, G7, G8, G9 und G10 erzeugen die entsprechenden Motorsignale.

Das erfindungsgemäße Verfahren läuft nach folgendem Regel-Zyklus ab:

Ein beliebig ausgesuchter Regel-Zyklus beginnt mit der Korrektur des Pausenzeit-Zählwerts. Danach erfolgt das Zurücksetzen des Soll- bzw. Istwert-Zählers Z1 auf Null durch das weitere Hilfssignal S2. Damit ist der Zähltakt für den Soll- bzw. Istwert-Zähler Z1, welcher ein 1/128 einer Zykluszeit beträgt, freigegeben. Der Soll- bzw. Istwert-Zähler Z1 läuft weiter bis er entweder durch Erreichen des Zählwertes "128" gestoppt wird oder durch das weitere Hilfssignal S2 wieder auf Null zurückgeführt wird.

Das Hilfssignal S1 korrigiert den (Pausenzeit-)Zähler Z2 entsprechend dem Zählerstand des Soll- bzw. Istwert-Zählers Z1 und des eigenen Zähler-standes. Dem Hilfssignal S1 folgt anschließend das weitere Hilfssignal S2 und ein neuer Regelzyklus beginnt.

Zur selben Zeit hat der Zähler Z2 einen Wert größer als Null angenommen. Dieser Zustand bedeutet, daß der Eingangszählwert "B" am Vergleicher V1 größer als der Wert "A" ist und somit am Ausgang "A kleiner B" (out) eine logische "1" anliegt. Da die beiden Ausgänge 2QC und 2QD am Soll- bzw. Istwert-Zähler Z1 zu diesem Zeitpunkt nullwertig sind, ist der Ausgang am Gatter G6 = "1" und im folgenden auch der Ausgang am Gatter G7 = "1". Diese logische "1" verhindert ein Durchschalten des Motorsignals SM. Der damit eingenommene Zustand (Pausenzeit) hält an, bis der Soll- bzw. Istwert-Zähler Z1 den Wert erreicht, bei dem die Eingänge "A" am Vergleicher V1 gleich den dortigen Eingängen "B" sind. Das Motorsignal SM wird jetzt wieder freigegeben. Damit ist ein Regel-Zyklus abgeschlossen. Bei der nächsten, zeitlich nachfolgenden Zählflanke 7 beginnt der so beschriebene Regelzyklus von vorne.

Mannesmann Aktiengesellschaft

Mannesmannufer 2

4000 Düsseldorf

"

Verfahren und Schaltungsanordnung zum genauen Drehzahl-Regeln eines
Gleichstrommotors, insbesondere eines Matrixdrucker-Gleichstrommotors

Patentansprüche

1.  Verfahren zum genauen Drehzahl-Regeln eines Gleichstrommotors,
    insbesondere eines Matrixdrucker-Gleichstrommotors, durch Ändern des
    Ansteuerungsstromes innerhalb einer Periode,
    dadurch gekennzeichnet,
    daß der Vergleichswert zwischen Ist- und Sollwert entsprechend ermitteltem negativen oder positiven Vorzeichen in Form von Impulspausen
    jeweils zwischen Impulsfolgen am Anfang der Periode zum Abschalten des
    pulsierenden Ansteuerungsstromes mit der Zeitdauer des Unterschiedes
    zwischen Ist- und Sollwert verwendet wird.

BAD ORIGINAL

2.   Verfahren nach Anspruch 1,
     dadurch gekennzeichnet,
     daß Istwerte, Sollwert, Vergleichswerte und Impulspausen jeweils in
     Form von Zählwerten zugrundegelegt werden.

3.   Verfahren nach den Ansprüchen 1 und 2,
     dadurch gekennzeichnet,
     daß als Istwert die jeweilige Zählflanke eines Impulses der in eine
     Vielzahl von Periodenabschnitten aufgelösten Drehgeschwindigkeit der
     mit einer opto-elektronisch abgetasteten Inkrementalscheibe versehenen
     Motorwelle verwendet wird.

4.   Verfahren nach den Ansprüchen 1 bis 3,
     dadurch gekennzeichnet,
     daß der Soll- bzw. Ist-Zählwert auf der Basis einer fest eingegebenen
     Anzahl von Zählimpulsen gebildet wird.

5.   Verfahren nach den Ansprüchen 1 bis 4,
     dadurch gekennzeichnet,
     daß die Sollwert-Zählung nach jeder Periodendauer angehalten und auf
     den Wert Null zurückgeführt wird.

6.   Verfahren nach den Ansprüchen 1 bis 5,
     dadurch gekennzeichnet,
     daß der Vergleichszählwert in dem Sollwert-Zähler unter Auslösung
     eines Hilfssignals in Abhängigkeit der Zählflanke des Beginnes einer
     Periodendauer gebildet wird.

7.   Verfahren nach den Ansprüchen 1 bis 6,
     dadurch gekennzeichnet,
     daß das Hilfssignal ein weiteres Hilfssignal auslöst, welches den
     Soll- bzw. Istwertzähler auf Null setzt.

8. Schaltungsanordnung zur Durchführung des Verfahrens nach den Ansprüchen 1 bis 7,
dadurch gekennzeichnet,
daß einem Soll- bzw. Istwert-Zähler (Z1) mit dem vorgegebenen Zählwert ein Vergleicher (V1) und ein Pausenzeit-Zähler (Z2) zugeordnet sind, wobei der Pausenzeit-Zähler (Z2) als Unterbrecher für den Motoransteuerstrom dient und den Zeitwert für die Pausenlänge vorgibt.

9. Schaltungsanordnung nach Anspruch 8,
dadurch gekennzeichnet,
daß am Eingang des Soll- bzw. Istwert-Zählers (Z1) ein Quarz-Oszillator für die Erzeugung einer konstanten Frequenz angeschlossen ist.

10. Schaltungsanordnung nach den Ansprüchen 7 bis 9,
dadurch gekennzeichnet,
daß an den jeweiligen Ausgängen (QA bis QD) des Pausenzeit-Zählers (Z2) die Zählwerte in zwei Zählrichtungen begrenzende Gatter (G1,G2) angeschlossen sind.

11. Schaltungsanordnung nach den Ansprüchen 7 bis 10,
dadurch gekennzeichnet,
daß der Soll- bzw. Istwert-Zähler (Z1) bei Anwendung auf einen Matrixdrucker der Nadelkopfbauart auf einen maximalen Zählwert von 120 bis 130 Impulsen pro Periodendauer eingestellt ist.

Fig.1

Fig. 2

# Fig. 3

0065927

# 0065927

Patentamt

**EUROPÄISCHER RECHERCHENBERICHT**

Nummer der Anmeldung

EP 82 73 0017

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A-2 295 617 (IBM CO.)<br><br>*Insgesamt* & DE - A - 2 556 014 | 1,2,4-10 | G 05 D 13/62 |
| Y | | 3 | |
| | --- | | |
| X | US-A-4 152 631 (BLACK BODY CO.)<br><br>*Spalte 3, Zeile 5 - Spalte 5, Zeile 43; Figur 1; Spalte 8, Zeile 43 - Spalte 9, Zeile 7; Figuren 1,2B,2C* | 1,2,4-10 | |
| Y | | 3 | |
| | --- | | RECHERCHIERTE SACHGEBIETE (Int. Cl. ³) |
| Y | DE-A-2 832 035 (AGFA-GEVAERT AG)<br>*Seite 7, Zeile 24 - Seite 8, Zeile 10; Seite 9, Zeile 18 - Seite 9, Zeile 1; Figuren* | 3 | G 05 D<br>H 02 P |
| | --- | | |
| A | IBM TECHNICAL DISCLOSURE BULLETIN, Band 14, Nr. 2, Juli 1971, Seiten 396-397, New York (USA);<br>B.J.HOLMAN: "Pulse width modulation velocity servomechanism".<br>*Insgesamt* | 1-11 | |
| | ---<br><br>-/- | | |

Der vorliegende Recherchenbericht wurde für alle Patentansprüche erstellt.

| Recherchenort | Abschlußdatum der Recherche | Prüfer |
|---|---|---|
| DEN HAAG | 23-08-1982 | HOUILLON J.C.P.L. |

**KATEGORIE DER GENANNTEN DOKUMENTEN**
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 722 041 (AGFA-GEVAERT A.G.) *Seite 7, Zeile 23 - Seite 11, Zeile 10; Figuren* | 1-4,9 | |
| | ----- | | |

RECHERCHIERTE SACHGEBIETE (Int. Cl. ³)

*Der vorliegende Recherchenbericht wurde für alle Patentansprüche erstellt.*

| Recherchenort DEN HAAG | Abschlußdatum der Recherche 23-08-1982 | Prüfer HOUILLON J.C.P.L. |
|---|---|---|